# FASCICULE DE BREVET EUROPEEN

(11) **EP 2 850 132 B1**
(45) Date de publication et mention de la délivrance du brevet: **22.06.2016**
(21) Numéro de dépôt: 13725411.6
(22) Date de dépôt: 03.05.2013
(51) Int. Cl.: C08L 51/06, C08G 81/02, C08K 3/34, C08K 7/00, B32B 27/08, B32B 1/08, B32B 27/18, B32B 27/32, B32B 27/34, B82Y 30/00

(54) **COUCHE THERMOPLASTIQUE D'UN CÂBLE, TUYAU, REVÊTEMENT OU ANALOGUE**
THERMOPLASTISCHE SCHICHT FÜR EIN KABEL, ROHR, BESCHICHTUNG ODER DERGLEICHEN
THERMOPLASTIC LAYER FOR A CABLE, PIPE, COATING OR ANALOGOUS

(30) Priorité: 16.05.2012 FR 1254501
(43) Date de publication de la demande: 25.03.2015
(73) Titulaire: Arkema France, 92700 Colombes (FR)
(72) Inventeur: SABARD, Mathieu, F-27470 Serquigny (FR); JOUSSET, Dominique, F-78380 Bougival (FR); FLAT, Jean-Jacues, F-27170 Goupillieres (FR); PEES, Bernard, F-13190 Allauch (FR); KHUSRAWY, Maliha, F-27300 Bernay (FR)
(74) Mandataire: Gavin, Pablo
(86) Numéro de dépôt international: PCT/FR2013/050980
(87) Numéro de publication internationale: WO 2013/171401

(56) Documents cités:
- EP-A1- 0 352 042
- WO-A1-01/10945
- WO-A1-2008/043750
- FR-A1- 2 966 464
- US-A1- 2003 229 184

## Description

### Domaine de l'invention

L'invention a pour objet une composition thermoplastique d'une pièce multicouche telle qu'un câble, tuyau, revêtement ou analogue (toutes types de structure disposant d'une couche, préférentiellement au moins deux couches) comprenant une polyoléfine greffée polyamide à laquelle est ajoutée des nanocharges lamellaires.

Un câble électrique présente classiquement une structure multicouche dans laquelle les différentes épaisseurs ou couches présentent à la fois des fonctions propres et dépendantes de celles des autres couches. Ainsi, un tel câble comprend généralement un fil conducteur de l'électricité entouré successivement d'une couche semi-conductrice, d'une couche isolante, d'une couche semi-conductrice externe puis d'une gaine de protection ; chacune desdites couches devant présenter, outre des propriétés isolantes/conductrices particulières, des qualités mécaniques et thermomécaniques bien spécifiques.

D'autres types de câbles, notamment utilisés dans l'automobile, doivent quant à eux présenter une parfaite tenue aux huiles ou une excellente résistance au vieillissement dans les huiles.

De manière générale, la satisfaction des propriétés physico-chimique (tenue à la chaleur ou à des conditions d'environnement spécifiques, résistance aux UVs etc.) d'une composition thermoplastique se fait classiquement par l'ajout de particules et adjuvants particuliers au détriment des qualités proprement mécaniques, thermomécaniques ou liées à la processabilité industrielle de cette composition (viscosité en particulier).

### Etat de l'art

On connaît le document WO 02/28959, au nom de la demanderesse, qui décrit un copolymère greffé à blocs polyamides sur un tronc en polyoléfine qui est choisi parmi les copolymères éthylène/anhydride maléique et éthylène/(méth)acrylate d'alkyle/anhydride maléique, formant un alliage co-continu nanostructuré. Cette composition particulière confère à ce copolymère des propriétés thermomécaniques exceptionnelles, qui sont maintenues lorsqu'on disperse ce copolymère greffé dans des polyoléfines souples telles que les copolymères de l'éthylène.

Une composition particulière de ce copolymère a par ailleurs été proposée pour former une couche (sans dilution) dans des câbles « sous capot moteur », présentant une excellente résistivité à l'huile. Une telle composition est divulguée dans le document EP 2115040.

En outre, le susdit copolymère, utilisé (pur) sans ajout dans des matrices polyoléfines susceptibles de conférer au mélange des propriétés particulières, présente une grande flexibilité qui l'autorise à être utilisé comme revêtement extérieur de câble. En effet, le copolymère de la demanderesse est facilement utilisé industriellement en particulier dans des structures multicouches du fait d'une viscosité, quelque soit les conditions de température, très satisfaisante.

Néanmoins, pour certaines applications, il est nécessaire d'augmenter de façon très significative ses propriétés mécaniques et thermomécaniques.

On connait également le document FR 2966464 de la demanderesse mais ce dernier ne divulgue ni même ne suggère l'invention telle que présentée ci-après.

### Brève description de l'invention

Il a été constaté par la demanderesse, après diverses expériences et manipulations, que, contrairement aux enseignements bien connues de l'homme du métier, la composition polyoléfine greffé polyamide, notamment divulguée dans le document WO 02/28959, présente lorsqu'on y ajoute une faible quantité de nanocharges lamellaires :
- une augmentation significative de son module élastique sur une large gamme de température,
- une amélioration de sa résistance aux chocs et une diminution de sa température de transition ductile-fragile,
- sans par ailleurs modifier de façon préjudiciable, notamment sur le plan de son industrialisation, la rhéologie de la composition.

En effet, même si l'amélioration de quelques propriétés mécaniques de certains thermoplastiques avaient été montrée lorsqu'on ajoute des composants d'argile, notamment par les documents US 5164440, US 6350804 ou US 7279521, il est connu de l'homme du métier que l'ajout de charges, en particulier de type argile (nanocharges lamellaires), a en particulier un impact très négatif sur la viscosité du produit, ce qui handicape très sérieusement sa processabilité industrielle. On trouve des exemples d'un tel enseignement dans les articles intitulés :
- « Effects of Carbon fillers on Rheology of Polypropylene-based Resins », Journal of composites materials, Julia A. King et Al., 2009;
- « Dispersion quality and rheological property of polymer/clay nanocomposites :ultrasonification effet ». S.T. Lim et Al., 2002;
- « Rheological behavior of hyperbranched polymer/montmorillonite clay nanocomposites ». Rodlert. M et Al., 2004.

Ainsi, la présente invention concerne une composition thermoplastique consistant en un tronc en polyoléfine contenant un reste d'au moins un monomère insaturé (X) et une pluralité de greffons en polyamide ainsi qu'un autre composant, dans lequel :
- les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique,
- le reste du monomère insaturé (X) est fixé sur le tronc par greffage ou copolymérisation,
caractérisée en ce que l'autre composant consiste en des nanocharges lamellaires, lesdites nanocharges étant des phyllosillicates et représentant de 1 % à 6,5 % en masse de la composition

On entend par l'expression "nanocharges lamellaires" un ensemble de feuillets type "mille feuilles". Les dimensions des feuillets individuels sont de l'ordre du nanomètre en épaisseur, de plusieurs dizaines de nanomètres à quelques micromètres en longueur. Dans le cadre de la présente invention, les "nanocharges lamellaires" sont des phyllosillicates (silicates lamellaires) et consisteront avantageusement en de la montmorillonite

D'autres caractéristiques avantageuses de l'invention sont précisées dans la suite :
- de préférence, les nanocharges lamellaires sont présentes entre 2 % et 5 % en masse de la composition.
- avantageusement, le susdit polymère greffé est nanostructuré.
- selon une particularité avantageuse de l'invention, la masse molaire en nombre des susdits greffons polyamide du susdit polymère greffé est comprise dans la gamme allant de 1000 à 5000 g/mol, de préférence comprise entre 2000 et 3000 g/mol.
- avantageusement, pour les susdits polymères greffés, le nombre de monomère (X) fixé sur le tronc en polyoléfine est supérieur ou égal à 1,3 et/ou inférieur ou égal à 20.
- de préférence, le monomère insaturé (X) est choisi parmi un anhydride d'acide carboxylique insaturé et un époxyde insaturé.
- selon une particularité intéressante de l'invention, le polyamide des greffons est un homopolyamide aliphatique, de préférence choisi parmi le polyamide 6, le polyamide 11 ou le polyamide 12.
- selon une possibilité avantageuse offerte par l'invention, la susdite composition contient uniquement la susdite polyoléfine greffée polyamide et les nanocharges lamellaires.

L'invention se rapporte également à une pièce multicouche, tels qu'un tube, tuyau, câble, revêtement ou analogue, comprenant une structure constituée d'au moins deux couches adjacentes, caractérisé en ce que l'une desdites couches comprend une composition selon l'invention telle que décrite ci-dessus.

Une telle pièce multicouche pourra par exemple consister en une gaine de pression utilisée dans les applications « offshore », dans les protections de câbles (électriques, optiques etc.), dans les tuyaux quelle que soit leur fonction (transport de fluide tels que de l'essence, de l'huile, des fluides frigorigènes etc.) ou notamment dans des réservoirs, par exemple des réservoirs automobiles (essences ou autres fluides). Ces pièces peuvent être obtenues par différentes techniques, par exemple par extrusion ou injection, sans que la composition selon l'invention soit limitée à une technique particulière.

La description qui va suivre est donnée uniquement à titre illustratif et non limitatif.

### Description détaillée de l'invention

S'agissant de ce polymère greffé susmentionné, le copolymère greffé à blocs polyamides peut être obtenu par réaction d'un polyamide, de préférence monofonctionnel, qui présente soit une extrémité réactive qui est une fonction amine, soit une extrémité réactive qui est une fonction acide carboxylique, avec les restes d'un monomère insaturé X fixé par greffage ou copolymérisation sur un tronc en polyoléfine.

Le monomère insaturé (X) est de préférence choisi parmi un anhydride d'acide carboxylique insaturé et un époxyde insaturé.

En particulier, dans le cas où l'extrémité réactive du greffon en polyamide est une fonction acide carboxylique, le monomère insaturé (X) est un époxyde insaturé.

Dans le cas où l'extrémité réactive du greffon en polyamide est une fonction amine, le monomère insaturé (X) peut être soit un époxyde insaturé, soit un anhydride d'acide carboxylique insaturé.

S'agissant du tronc polyoléfine, c'est un polymère comprenant comme monomère une α-oléfine.

On préfère les α-oléfines ayant de 2 à 30 atomes de carbone.

A titre d'α-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène.

On peut également citer les cyclo-oléfines ayant de 3 à 30 atomes de carbone, préférentiellement de 3 à 20 atomes de carbone, tels que le cyclopentane, le cycloheptène, le norbornène, le 5-méthyl-2-norbomène, le tétracyclododécène, et le 2-méthyl-1,4,5,8-diméthano-1,2,3,4,4a,5,8,8a-octahydronaphthalène ; di et polyoléfines, telles que la butadiène, l'isoprène, le 4-méthyl-1,3-pentadiène, le 1,4-pentadiène, 1,5-hexadiène, 1,3-hexadiène, 1,3-octadiène, 1,4-octadiène, 1,5-octadiène, 1,6-octadiène, l'éthylidènenorbomène, le vinyle norbornène, le dicyclopentadiène, le 7-méthyl-1,6-octadiène, le 4-éthylidiène-8-méthyl-1,7-nonadiène, et le 5,9-diméthyl-1,4,8-décatriène ; les composés vinyliques aromatiques tels que le mono- ou poly alkylstyrènes (comprenant le styrène, o-méthylstyrène, m-méthylstyrène, p-méthylstyrène, o,p-diméthylstyrène, o-éthylstyrène, m-éthylstyrène et p-éthylstyrène), et les dérivés comprenant des groupes fonctionnels tels que le méthoxystyrène, l'éthoxystyrène, l'acide benzoïque vinylique, le benzoate de méthyle vinyle, l'acétate de benzyle vinyle, l'hydroxystyrène, l'o-chlorostyrène, le p-chlorostyrène, le di-vinyle benzène, le 3-phénylpropène, le 4-phénylpropène, le α-méthylstyrène, le vinyle chloride, le 1,2-difluoroéthylène, le 1,2-dichloroéthylène, le tétrafluoroéthylène, et le 3,3,3-trifluoro-1-propène.

Dans le cadre de la présente invention, le terme d'α-oléfine comprend également le styrène. On préfère le propylène et tout spécialement l'éthylène comme α-oléfine.

Cette polyoléfine peut-être un homopolymère lorsqu'une seule α-oléfine est polymérisée dans la chaîne polymère. On peut citer comme exemples le polyéthylène (PE) ou le polypropylène (PP).

Cette polyoléfine peut aussi être un copolymère lorsqu'au moins deux comonomères sont copolymérisés dans la chaîne polymère, l'un des deux comonomères dit le « premier comonomère » étant une α-oléfine et l'autre comonomère, dit « deuxième comonomère », est un monomère capable de polymériser avec le premier monomère.

A titre de deuxième comonomère, on peut citer :
- une des α-oléfines déjà citées, celle-ci étant différente du premier comonomère α-oléfine,
- les diènes tels que par exemple le 1,4-hexadiène, l'éthylidène norbornène, le butadiène
- les esters d'acides carboxyliques insaturés tels que par exemple les acrylates d'alkyle ou les méthacrylates d'alkyle regroupés sous le terme (méth)acrylates d'alkyles. Les chaînes alkyles de ces (méth)acrylates peuvent avoir jusqu'à 30 atomes de carbone. On peut citer comme chaînes alkyles le méthyle, l'éthyle, le propyl, n-butyl, sec-butyl, Isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, hencosyl, docosyl, tricosyl, tetracosyl, pentacosyl, hexacosyl, heptacosyl, octacosyl, nonacosyl. On préfère les (méth)acrylates de méthyle, éthyle et butyle comme esters d'acide carboxylique insaturés.
- les esters vinyliques d'acide carboxyliques. A titre d'exemples d'esters vinyliques d'acide carboxylique, on peut citer l'acétate de vinyle, le versatate de vinyle, le propionate de vinyle, le butyrate de vinyle, ou le maléate de vinyle. On préfère l'acétate de vinyle comme ester vinylique d'acide carboxylique.

Avantageusement, le tronc en polyoléfine comprend au moins 50 % en moles du premier co mono mère ; sa densité peut être avantageusement comprise entre 0,91 et 0,96.

Les troncs polyoléfines préférés sont constitués d'un copolymère éthylène-(méth)acrylate d'alkyle. En utilisant ce tronc polyoléfine, on obtient une excellente tenue au vieillissement à la lumière et à la température.

On ne sortirait pas du cadre de l'invention si différents « deuxièmes comonomères » étaient copolymérisés dans le tronc polyoléfine.

Selon la présente invention, le tronc polyoléfine contient au moins un reste de monomère insaturé (X) pouvant réagir sur une fonction acide et/ou amine du greffon polyamide par une réaction de condensation. Selon la définition de l'invention, le monomère insaturé (X) n'est pas un « deuxième comonomère ».

Comme monomère insaturé (X) compris sur le tronc polyoléfine, on peut citer :
- les époxydes insaturés. Parmi ceux-ci, ce sont par exemple les esters et éthers de glycidyle aliphatiques tels que l'allylglycidyléther, le vinylglycidyléther, le maléate et l'itaconate de glycidyle, l'acrylate et le méthacrylate de glycidyle. Ce sont aussi par exemple les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate. On préfère utiliser le méthacrylate de glycidyle comme époxyde insaturé.
- les acides carboxyliques insaturés et leurs sels, par exemple l'acide acrylique ou l'acide méthacrylique et les sels de ces mêmes acides.
- les anhydrides d'acide carboxylique. Ils peuvent être choisis par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On préfère utiliser l'anhydride maléique comme anhydride d'acide carboxylique.

Le monomère insaturé (X) est de préférence choisi parmi un anhydride d'acide carboxylique insaturé et un époxyde insaturé. En particulier, pour réaliser la condensation du greffon polyamide avec le tronc polyoléfine, dans le cas où l'extrémité réactive du greffon en polyamide est une fonction acide carboxylique, le monomère insaturé (X) est préférentiellement un époxyde insaturé. Dans le cas où l'extrémité réactive du greffon en polyamide est une fonction amine, le monomère insaturé (X) est avantageusement un époxyde insaturé et préférentiellement un anhydride d'acide carboxylique insaturé.

Le tronc polyoléfine contenant le reste du monomère insaturé (X) est obtenu par polymérisation des monomères (premier comonomère, deuxième comonomère éventuel, et éventuellement monomère insaturé (X)). On peut réaliser cette polymérisation par un procédé radicalaire à haute pression ou un procédé en solution, en réacteur autoclave ou tubulaire, ces procédés et réacteurs étant bien connus de l'homme du métier. Lorsque le monomère insaturé (X) n'est pas copolymérisé dans le tronc polyoléfine, il est greffé sur le tronc polyoléfine. Le greffage est également une opération connue en soi. La composition serait conforme à l'invention si plusieurs monomères fonctionnels (X) différents étaient copolymérisés et/ou greffés sur le tronc polyoléfine.

Selon les types et ratio de monomères, le tronc polyoléfine peut être semi-cristallin ou amorphe. Dans le cas des polyoléfines amorphes, seule la température de transition vitreuse est observée, tandis que dans celui des polyoléfines semi-cristallins une température de transition vitreuse et une température de fusion (qui sera nécessairement supérieure) sont observées. Il suffira à l'homme du métier de sélectionner les ratios de monomère et les masses moléculaires du tronc polyoléfine pour pouvoir obtenir aisément les valeurs voulues de température de transition vitreuse, éventuellement de température de fusion ainsi que de viscosité du tronc polyoléfine.

Les greffons polyamide peuvent être soit des homopolyamides, soit des copolyamides.

Sont notamment visés par l'expression "greffons polyamides" les homopolyamides aliphatiques qui résultent de la polycondensation :
- d'un lactame,
- ou d'un acide alpha, omega-aminocarboxylique aliphatique,
- ou d'une diamine aliphatique et d'un diacide aliphatique.

A titre d'exemples de lactame, on peut citer le caprolactame, l'oenantholactame et le lauryllactame.

A titre d'exemples d'acide alpha, omega-aminocarboxylique aliphatique, on peut citer l'acide aminocaproïque, l'acide amino-7-heptanoïque, l'acide amino-11-undécanoïque et l'acide amino-12-dodécanoïque.

A titre d'exemples de diamine aliphatique, on peut citer l'hexa-méthylènediamine, la dodécaméthylènediamine et la triméthylhexaméthylène diamine.

A titre d'exemples de diacide aliphatique, on peut citer les acides adipique, azélaïque, subérique, sébacique et dodécanedicarboxylique.

Parmi les homopolyamides aliphatiques, on peut citer, à titre d'exemple et de façon non limitative, les polyamides suivants : le polycaprolactame (PA6) ; le polyundécanamide (PA11, commercialisé par ARKEMA sous la marque Rilsan^{®}) ; le polylauryllactame (PA12, également commercialisé par ARKEMA sous la marque Rilsan^{®}) ; le polybutylène adipamide (PA4.6) ; le polyhexaméthylène adipamide (PA6.6) ; le polyhexaméthylène azélamide (PA6.9) ; le polyhexaméthylène sébaçamide (PA-6.10) ; le polyhexaméthylène dodécanamide (PA6.12) ; le polydécaméthylène dodécanamide (PA10.12) ; le polydécaméthylène sébaçanamide (PA10.10) et le polydodecaméthylène dodécanamide (PA12.12).

Sont également visés par l'expression "polyamides semi-cristallins" les homopolyamides cycloaliphatiques.

On peut notamment citer les homopolyamides cycloaliphatiques qui résultent de la condensation d'une diamine cycloaliphatique et d'un diacide aliphatique.

A titre d'exemple de diamine cycloaliphatique, on peut citer la 4,4'-méthylene-bis(cyclohexylamine), encore dénommée para-bis(aminocyclo-hexyl)méthane ou PACM, la 2,2'-diméthyl-4,4'méthylène-bis(cyclo-hexyl-amine), encore dénommée bis-(3-méthyl-4-aminocyclohexyl)-méthane ou BMACM.

Ainsi, parmi les homopolyamides cycloaliphatiques, on peut citer les polyamides PACM.12, résultant de la condensation du PACM avec le diacide en C12, les BMACM.10 et BMACM.12 résultant de la condensation de la BMACM avec, respectivement, les diacides aliphatiques en C10 et en C12.

Sont également visés par l'expression "greffons polyamide" les homopolyamides semi-aromatiques qui résultent de la condensation :
- d'une diamine aliphatique et d'un diacide aromatique, tel que l'acide téréphtalique (T) et l'acide isophtalique (I). Les polyamides obtenus sont alors couramment appelés "polyphtalamides" ou PPA ;
- d'une diamine aromatique, telle que la xylylènediamine, et plus particulièrement la métaxylylènediamine (MXD) et d'un diacide aliphatique.

Ainsi, et de manière non limitative, on peut citer les polyamides 6.T, 6.I, MXD.6 ou encore MXD.10.

Les greffons polyamide rentrant enjeu dans la composition selon l'invention sont préférentiellement des homopolyamides aliphatiques, que le polyamide soit semi-cristallin ou amorphe.

A titre d'exemple, on pourra citer le poly(caprolactame) PA6, le poly(hexaméthylèneadipamide) PA6-6, le poly(hexaméthylène sébaçamide) PA6-10, le poly(lauroamide) PA12, le poly(undécanamide) PA11, le poly(tétraméthylène adipamide) PA4-6, le poly(hexaméthylène azélaamide) PA6-9 ou le poly(hexaméthylène dodécanediamide) PA6-12.

Le degré de polymérisation peut varier dans de larges proportions, selon sa valeur c'est un polyamide ou un oligomère de polyamide.

Avantageusement, les greffons polyamide sont mono fonctionnels.

Pour que le greffon polyamide ait une terminaison monoamine, il suffit d'utiliser un limiteur de chaîne de formule : 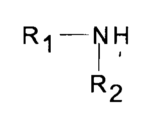 dans laquelle :
- R1 est l'hydrogène ou un groupement alkyle linéaire ou ramifié contenant jusqu'à 20 atomes de carbone,
- R2 est un groupement ayant jusqu'à 20 atomes de carbone alkyle ou alcényle linéaire ou ramifié, un radical cycloaliphatique saturé ou non, un radical aromatique ou une combinaison des précédents. Le limiteur peut être, par exemple, la laurylamine ou l'oleylamine.

Pour que le greffon polyamide ait une terminaison monoacide carboxylique, il suffit d'utiliser un limiteur de chaîne de formule R'1-COOH, R'1-CO-O-CO-R'2 ou un diacide carboxylique.

R'1 et R'2 sont des groupements alkyles linéaires ou ramifiés contenant jusqu'à 20 atomes de carbone.

Avantageusement, le greffon polyamide possède une extrémité à fonctionnalité amine. Les limiteurs monofonctionnels de polymérisation préférés sont la laurylamine et l'oléylamine.

La polycondensation définie ci-dessus s'effectue selon les procédés habituellement connus, par exemple à une température comprise en général entre 200 et 300°C, sous vide ou sous atmosphère inerte, avec agitation du mélange réactionnel. La longueur de chaîne moyenne du greffon est déterminée par le rapport molaire initial entre le monomère polycondensable ou le lactame et le limiteur monofonctionnel de polymérisation. Pour le calcul de la longueur de chaîne moyenne, on compte habituellement une molécule de limiteur de chaîne pour une chaîne de greffon.

Il suffira à l'homme du métier de sélectionner les types et ratio de monomères ainsi que choisir les masses molaires des greffons polyamide pour pouvoir obtenir aisément les valeurs voulues de température de transition vitreuse, éventuellement de température de fusion ainsi que de viscosité du greffon polyamide.

La réaction de condensation du greffon polyamide sur le tronc de polyoléfine contenant le reste de X s'effectue par réaction d'une fonction amine ou acide du greffon polyamide sur le reste de X. Avantageusement, on utilise des greffons polyamide monoamine et on crée des liaisons amides ou imides en faisant réagir la fonction amine sur la fonction du reste de X.

On réalise cette condensation de préférence à l'état fondu. Pour fabriquer la composition selon l'invention, on peut utiliser les techniques classiques de malaxage et/ou d'extrusion. Les composants de la composition sont ainsi mélangés pour former un compound qui pourra éventuellement être granulé en sortie de filière.

Pour obtenir une composition nanostructurée, on peut ainsi mélanger le greffon polyamide et le tronc dans une extrudeuse, à une température généralement comprise entre 200 et 300 °C. Le temps de séjour moyen de la matière fondue dans l'extrudeuse peut être compris entre 5 secondes et 5 minutes, et de préférence entre 20 secondes et 1 minute. Le rendement de cette réaction de condensation est évalué par extraction sélective des greffons de polyamide libres, c'est-à-dire ceux qui n'ont pas réagi pour former le polymère greffé polyamide.

La préparation de greffons polyamide à extrémité amine ainsi que leur addition sur un tronc de polyoléfine contenant le reste de (X) est décrite dans les brevets US3976720, US3963799, US5342886 et FR2291225. Le polymère greffé polyamide de la présente invention présente avantageusement une organisation nanostructurée.

Des plastifiants pourront être ajoutés à la composition afin de faciliter la mise en oeuvre et améliorer la productivité du procédé de fabrication de la composition et des structures. On citera comme exemples les huiles minérales paraffiniques aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

De la même manière, des promoteurs d'adhésion, bien que non nécessaires, peuvent être avantageusement ajoutés afin d'améliorer le pouvoir d'adhérence de la composition lorsque celui-ci doit être particulièrement élevé. Le promoteur d'adhésion est un ingrédient non polymérique ; il peut être organique, cristallin, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes, les trialcooxysilane. On pourra également prévoir que ces promoteurs d'adhésion sont directement greffés sur la polyoléfine par une technique bien connue de l'homme du métier, par exemple l'extrusion réactive.

Le rayonnement UV étant susceptible d'entraîner un léger jaunissement de la composition, des stabilisants UV et des absorbeurs UV (ces composés étant dénommés de manière générale des agents anti-UVs) tels que le benzotriazole, le benzophénone et les autres amines encombrés, peuvent être ajoutés afin d'assurer la transparence de la formulation durant sa durée de vie. Ces composés peuvent être par exemple à base de benzophénone ou de benzotriazole. On peut les ajouter dans des quantités inférieures à 10% en masse de la masse totale de la composition et préférentiellement de 0,1 à 5%.

On pourra également ajouter des anti-oxydants pour limiter le jaunissement lors de la fabrication de la pièce thermoplastique tels que les composés phosphorés (phosphonites et/ou phosphites) et les phénoliques encombrés. On peut ajouter ces anti-oxydants dans des quantités inférieures à 10% en masse de la masse totale de la composition et préférentiellement de 0,1 à 5%.

De la même manière, des agents retardateurs de flamme peuvent également être ajoutés à la composition thermoplastique Ces agents peuvent être halogénés ou non-halogénés. Parmi les agents halogénés, on peut citer les produits bromés. On peut également utiliser comme agent non-halogéné les additifs à base de phosphore tels que le phosphate d'ammonium, de polyphosphate, de phosphinate ou de pyrophosphate, le cyanurate de mélamine, le pentaérythritol, les zéolithes ainsi que les mélanges de ces agents. La composition peut comprendre ces agents dans des proportions allant de 3 à 40% par rapport à la masse totale de la composition. On pourra également ajouter des composés colorants ou azurants.

### Préparation de la composition selon l'invention :

La technique de greffage des greffons polyamide sur le tronc polyoléfine pour obtenir la polyoléfine greffé polyamide selon l'invention est bien connu de l'homme du métier, et notamment des documents cités précédemment FR 2912150, FR 2918150 ou EP 21966489.

Le coumpoundage a été réalisé sur extrudeuse double vis co-rotative engrenante auto-nettoyante de type Coperion ZSK 30 de diamètre 30 millimètres, de longueur trente fois son diamètre avec un profil plat à 260°C, un débit de 20 kg/h (kilogramme par heure) et une vitesse de rotation de 300 rpm (tour par minute). Les matières sont introduites en alimentation principale.

On ne sort donc pas du cadre de l'invention si des agents réticulant sont ajoutés. On peut citer comme exemples des isocyanates ou des peroxydes organiques. Cette réticulation peut également être réalisée par des techniques connues d'irradiation. Cette réticulation peut être effectuée par l'une des nombreuses méthodes connues de l'homme du métier, notamment par l'utilisation d'initiateurs activés thermiquement, par exemple des composés peroxydes et azo, des photoinitiateurs tels que le benzophénone, par des techniques de radiation comportant des rayons lumineux, des rayons UV, des faisceaux d'électrons et des rayons X, de silanes porteurs de fonctions réactives comme un amino silane, un époxy silane, un vinyle silane tel que par exemple le vinyle silane tri-éthoxy ou tri-méthoxy, et de la réticulation par voie humide. Le manuel intitulé « Handbook of polymer foams and technology » supra, aux pages 198 à 204, fournit des enseignements complémentaires auxquels l'homme du métier peut se référer.

On notera également que la composition selon l'invention peut également être présente sous forme d'un mélange maître, classiquement sous forme de poudre. Ce mélange maitre comprend outre la composition selon l'invention, et d'éventuels additifs, un ou plusieurs peroxydes destinés à permettre la polymérisation/réticulation d'un ou plusieurs polymère(s).

### Matériaux employés pour former les formulations testées :

**Apolhya^{®}**: La famille Apolhya est une famille de polymères commercialisée par ARKEMA qui allient les propriétés des polyamides à celles des polyoléfines grâce à l'obtention de morphologies co-continues à l'échelle manométrique.

**Montmorillonite** : minéral composé de silicate d'aluminium et de magnésium hydraté, bien connu de l'homme du métier et qui peut être fourni par un très grand nombre de sociétés.

### Obtention des formulations des compositions testées :

Pour les tests de choc, des barreaux de dimension (80 x 10 x 4 mm³) ont été réalisés par injection moulage sur presse à injecter de marque Krauss Maffei. Les paramètres procédés suivants ont été utilisés quel que soit le taux de montmorillonite:
- Température d'injection : 230°C
- Température du moule : 32°C
- Temps de maintien : 20 secondes
- Pression de maintien de la matière : 200 bars.
- Temps de refroidissement : 10 secondes

Pour les tests mécaniques dynamiques (AMD), des bandes monocouches de 1 mm (millimètre) d'épaisseur ont été réalisées par extrusion à plat sur une ligne d'extrusion de laboratoire. Il s'agit d'une extrudeuse bi-vis contrarotative de type Haake 1 équipée d'une filière plate de 3 cm (centimètre) de large et de 1 mm (millimètre) d'ouverture. Les éléments de fourreaux sont chauffés selon un profil plat à 210°C ; la vitesse de rotation des vis est de 80 rpm (Tour par Minute).

### Tests réalisés sur les bandes et les barreaux :

Les différents échantillons réalisés sont testées avec un Apolhya^{®} à un taux de greffage polyamide identique pour tous les échantillons en faisant varier le pourcentage massique de montmorillonite, ci-après désigné par l'abréviation MMT.

Dans le cadre des tests présentés ci-dessous, il est retenu des Apolhya^{®} LB93 (commercialisé par la demanderesse) présentant un taux de greffage polyamide de l'ordre de 30% à 40% mais il est bien entendu que des tests ont été réalisés avec des quantités différentes de taux de greffage polyamide et que les résultats obtenus, pour un même Apolhya^{®}, ont été similaires.

Le tableau présente les résultats des tests de mesure du MFI ou « Melt Flow Index » (indice de viscosité à 230°C, 2,16 kg), le module d'élasticité (E') ainsi que la valeur de température de transition ductile-fragile (T_{DF}) de l'échantillon considéré, mesurés respectivement en MégaPascals, à 23°C et à 140°C et en degré Celsius. Les mesures de MFI ont été réalisées selon la norme ISO 1133, sur plastomètre Göttfert MI-3. La filière utilisée a un diamètre de 2095 millimètres et une longueur de 8000 millimètres. Le préchauffage a été fixé à cinq minutes. Les mesures ont été menées sur échantillons séchés sous vide à 80°C pendant une nuit (12 heures).

Le module élastique (E') a été mesuré grâce à un viscoanalyseur ou analyseur mécanique dynamique (AMD), modèle Q800, sur les bandes extrudées. Un balayage en température de -100 à 220°C à 2°C/min. (degrés par minute) à une fréquence de sollicitation de 1 Hz a été réalisé. Les mesures ont été menées sur échantillons séchés sous vide à 80°C pendant une nuit (12 heures).

Les essais de choc ont été réalisés selon la norme ISO 179 1eA avec balayage en température entre -40 et 23°C sur les barreaux injectés. Les échantillons ont été conditionnés au préalable 3 semaines à 23°C, 50% HR (Humidité Relative).

| | %MMT | MFI (g/10 min.) | E' à 23°C (MPa) | E' à 140°C (MPa) | TDF (°Celsius) |
|---|---|---|---|---|---|
| Echantillon n°1 | 0 | 8,6 | 436 | 45 | [+5 à+10] |
| Echantillon n°2 | 0,5 | 8,9 | 444 | 46 | [+5 à +10] |
| Echantillon n°3 | 0,8 | 9 | 453 | 47 | [+4 à +9] |
| Echantillon n°4 | 1,2 | 9,1 | 477 | 49 | [-5 à 0] |
| Echantillon n°5 | 1,8 | 9 | 488 | 50 | [-5 à 0] |
| Echantillon n°6 | 2,4 | 8,9 | 500 | 51 | [-5 à -7,5] |
| Echantillon n°7 | 4,8 | 10 | 590 | 60 | [-5 à -7,5] |
| Echantillon n°8 | 5,5 | 8,3 | 620 | 63 | [-5 à -7,5] |
| Echantillon n°9 | 6 | 7,7 | 650 | 67 | [-5 à 0] |
| Echantillon n° 10 | 7,5 | 4,3 | 710 | 73 | [0 à +10] |
| Echantillon n°11 | 8 | 3 | 728 | 75 | [0 à +10] |

Ces résultats montrent clairement, et contrairement à nouveau à ce qui pouvait être attendu de façon théorique et empirique, que les compositions comprenant une faible quantité massique de nanocharges lamellaires, de type phyllosillicates, permettent d'améliorer significativement, voire très significativement, les qualités mécaniques et thermomécaniques d'une polyoléfine greffé polyamide d'un type particulier sans pour autant dégrader ses propriétés de viscosité, autrement dit sa rhéologie.

On notera qu'en particulier les éprouvettes n°6 et n°7 présentent des performances très intéressantes.

## Revendications

1. Composition thermoplastique consistant en un tronc en polyoléfine contenant un reste d'au moins un monomère insaturé (X) et une pluralité de greffons en polyamide ainsi qu'un autre composant, dans lequel :
- les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique,
- le reste du monomère insaturé (X) est fixé sur le tronc par greffage ou copolymérisation,
**caractérisée en ce que** l'autre composant consiste en des nanocharges lamellaires, lesdites nanocharges étant des phyllosillicates et représentant de 1 % à 6,5 % en masse de la composition.

2. Composition selon la revendication 1, **caractérisée en ce que** les nanocharges lamellaires consistent en de la montmorillonite.

3. Composition selon la revendication 1 ou 2, **caractérisée en ce que** les nanocharges lamellaires sont présentes entre 2 % et 5 % en masse de la composition.

4. Composition selon l'une quelconque des revendications précédentes, **caractérisée en ce que** le susdit polymère greffé est nanostructuré.

5. Composition selon l'une quelconque des revendications précédentes, **caractérisée en ce que** la masse molaire en nombre des susdits greffons polyamide du susdit polymère greffé est comprise dans la gamme allant de 1000 à 5000 g/mol, de préférence comprise entre 2000 et 3000 g/mol.

6. Composition selon l'une quelconque des revendications précédentes, **caractérisée en ce que**, pour les susdits polymères greffés, le nombre de monomère (X) fixé sur le tronc en polyoléfine est supérieur ou égal à 1,3 et/ou inférieur ou égal à 20.

7. Composition selon l'une quelconque des revendications précédentes, **caractérisée en ce que** le monomère insaturé (X) est choisi parmi un anhydride d'acide carboxylique insaturé et un époxyde insaturé.

8. Composition selon l'une quelconque des revendications précédentes, **caractérisée en ce que** le polyamide des greffons est un homopolyamide aliphatique, de préférence choisi parmi le polyamide 6, le polyamide 11 ou le polyamide 12.

9. Composition selon l'une quelconque des revendications précédentes, **caractérisée en ce que** ladite composition contient uniquement la susdite polyoléfine greffée polyamide et les nanocharges lamellaires.

10. Pièce multicouche, tels qu'un tube, tuyau, câble, revêtement ou analogue, comprenant une structure constituée d'au moins deux couches adjacentes, **caractérisé en ce que** l'une desdites couches comprend une composition selon l'une quelconque des revendications 1 à 9.

## Patentansprüche

1. Thermoplastische Zusammensetzung, die aus einer Polyolefinhauptkette, welche einen Rest mindestens eines ungesättigten Monomers (X) und mehrere aufgepfropfte Polyamidseitenketten aufweist, sowie aus einem weiteren Bestandteil besteht, wobei
- die aufgepfropften Polyamidseitenketten über den Rest des ungesättigten Monomers (X) an die Polyolefinhauptkette gebunden sind, wobei dieser eine funktionelle Gruppe umfasst, die dazu befähigt ist, durch eine Kondensationsreaktion mit einem Polyamid zu reagieren, welches mindestens ein endständiges Amin und/oder mindestens eine endständige Carbonsäure aufweist,
- der Rest des ungesättigten Monomers (X) mittels einer Pfropfung oder einer Copolymerisation an die Hauptkette gebunden ist,
**dadurch gekennzeichnet, dass** der weitere Bestandteil aus lamellaren Nanofüllstoffen besteht,
wobei es sich bei den Nanofüllstoffen um Schichtsilikate handelt und diese 1 % bis 6,5 % der Masse der Zusammensetzung ausmachen.

2. Zusammensetzung nach Anspruch 1, **dadurch gekennzeichnet, dass** die lamellaren Nanofüllstoffe aus Montmorillonit bestehen.

3. Zusammensetzung nach Anspruch 1 oder 2, **dadurch gekennzeichnet, dass** die lamellaren Nanofüllstoffe derart vorliegen, dass sie 2 % bis 5 % der Masse der Zusammensetzung ausmachen.

4. Zusammensetzung nach einem beliebigen der vorhergehenden Ansprüche, **dadurch gekennzeichnet, dass** das oben genannte Pfropfpolymer nanostrukturiert ist.

5. Zusammensetzung nach einem beliebigen der vorhergehenden Ansprüche, **dadurch gekennzeichnet, dass** der Zahlenwert der Molmasse der oben genannten aufgepfropften Polyamidseitenketten des oben genannten Pfropfpolymers im Bereich von 1.000 bis 5.000 g/mol liegt, vorzugsweise im Bereich von 2.000 bis 3.000 g/mol.

6. Zusammensetzung nach einem beliebigen der vorhergehenden Ansprüche, **dadurch gekennzeichnet, dass** bei den oben genannten Pfropfpolymeren die Anzahl an Monomeren (X), welche an die Polyolefinhauptkette gebunden sind, mindestens 1,3 und/oder höchstens 20 beträgt.

7. Zusammensetzung nach einem beliebigen der vorhergehenden Ansprüche, **dadurch gekennzeichnet, dass** das ungesättigte Monomer (X) aus einem ungesättigten Carbonsäureanhydrid und einem ungesättigten Epoxid ausgewählt ist.

8. Zusammensetzung nach einem beliebigen der vorhergehenden Ansprüche, **dadurch gekennzeichnet, dass** es sich bei dem Polyamid der aufgepfropften Seitenketten um ein aliphatisches Homopolymer handelt, welches vorzugsweise aus Polyamid 6, Polyamid 11 oder Polyamid 12 ausgewählt ist.

9. Zusammensetzung nach einem beliebigen der vorhergehenden Ansprüche, **dadurch gekennzeichnet, dass** die Zusammensetzung ausschließlich das oben genannten polyamidgepfropfte Polyolefin und die lamellaren Nanofüllstoffe enthält.

10. Mehrschichtiges Teil, wie etwa eine Röhre, eine Rohrleitung, ein Seil, eine Beschichtung oder dergleichen, welches eine Struktur umfasst, die aus mindestens zwei aneinandergrenzenden Schichten besteht, **dadurch gekennzeichnet, dass** eine der Schichten eine Zusammensetzung nach einem beliebigen der Ansprüche 1 bis 9 umfasst.

## Claims

1. A thermoplastic composition consisting of a polyolefin backbone containing a residue of at least one unsaturated monomer (X) and a plurality of polyamide grafts, and also another component, wherein:
- the polyamide grafts are attached to the polyolefin backbone by the residue of the unsaturated monomer (X) comprising a function capable of reacting via a condensation reaction with a polyamide having at least one amine end group and/or at least one carboxylic acid end group,
- the residue of the unsaturated monomer (X) is attached to the backbone by grafting or copolymerization,
**characterized in that** the other component consists of platy nanofillers, said nanofillers being phyllosilicates and representing from 1% to 6.5% by weight of the composition.

2. The composition as claimed in claim 1, **characterized in that** the platy nanofillers consist of montmorillonite.

3. The composition as claimed in claim 1 or 2, **characterized in that** the platy nanofillers are present between 2% and 5% by weight of the composition.

4. The composition as claimed in any one of the preceding claims, **characterized in that** the aforesaid graft polymer is nanostructured.

5. The composition as claimed in any one of the preceding claims, **characterized in that** the number-average molar mass of the aforesaid polyamide grafts of the aforesaid graft polymer is within the range extending from 1000 to 5000 g/mol, preferably between 2000 and 3000 g/mol.

6. The composition as claimed in any one of the preceding claims, **characterized in that**, for the aforesaid graft polymers, the number of monomers (X) attached to the polyolefin backbone is greater than or equal to 1,3 and/or less than or equal to 20.

7. The composition as claimed in any one of the preceding claims, **characterized in that** the unsaturated monomer (X) is selected from an unsaturated carboxylic acid anhydride and an unsaturated epoxide.

8. The composition as claimed in any one of the preceding claims, **characterized in that** the polyamide of the grafts is an aliphatic homopolyamide, preferably selected from polyamide 6, polyamide 11 or polyamide 12.

9. The composition as claimed in any one of the preceding claims, **characterized in that** said composition contains only the aforesaid polyamide-grafted polyolefin and the platy nanofillers.

10. A multilayer part, such as a tube, pipe, cable, coating or the like, comprising a structure consisting of at least two adjacent layers, **characterized in that** one of said layers comprises a composition as claimed in any one of claims 1 to 9.
